# FASCICULE DE BREVET EUROPEEN

(11) **EP 2 678 610 B1**
(45) Date de publication et mention de la délivrance du brevet: **18.11.2015**
(21) Numéro de dépôt: 12709937.2
(22) Date de dépôt: 20.02.2012
(51) Int. Cl.: F23R 3/06

(54) **CHAMBRE ANNULAIRE DE COMBUSTION DE TURBOMACHINE COMPRENANT DES ORIFICES DE DILUTION AMELIORES**
RINGFÖRMIGE BRENNKAMMER FÜR EINE TURBINENMASCHINE MIT VERBESSERTEN VERDÜNNUNGSÖFFNUNGEN
ANNULAR COMBUSTION CHAMBER FOR A TURBINE ENGINE INCLUDING IMPROVED DILUTION OPENINGS

(30) Priorité: 25.02.2011 FR 1151561
(43) Date de publication de la demande: 01.01.2014
(73) Titulaire: Snecma, 75015 Paris (FR)
(72) Inventeur: LEBLOND, Nicolas, Christian, Raymond, F-77550 Moissy-Cramayel Cedex (FR); BUNEL, Jacques, Marcel, Arthur, F-77550 Moissy-Cramayel Cedex (FR); LAINS, Dominique, Maurice, Jacques, F-77550 Moissy-Cramayel Cedex (FR)
(74) Mandataire: Ilgart, Jean-Christophe
(86) Numéro de dépôt international: PCT/FR2012/050355
(87) Numéro de publication internationale: WO 2012/114030

(56) Documents cités:
- EP-A2- 1 281 916
- EP-A2- 1 363 075
- US-A1- 2010 077 763
- US-B1- 6 513 331

## Description

### DOMAINE TECHNIQUE

La présente invention se rapporte au domaine des chambres annulaires de combustion des turbomachines, telles que celles qui équipent les aéronefs.

Elle concerne plus particulièrement les orifices d'entrée d'air de dilution ménagés dans les parois coaxiales de ces chambres de combustion.

### ÉTAT DE LA TECHNIQUE ANTÉRIEURE

Les turbomachines comprennent au moins une turbine agencée en sortie d'une chambre de combustion pour extraire de l'énergie d'un flux primaire de gaz éjectés par cette chambre de combustion et entraîner un compresseur disposé en amont de la chambre de combustion et alimentant cette chambre en air sous pression.

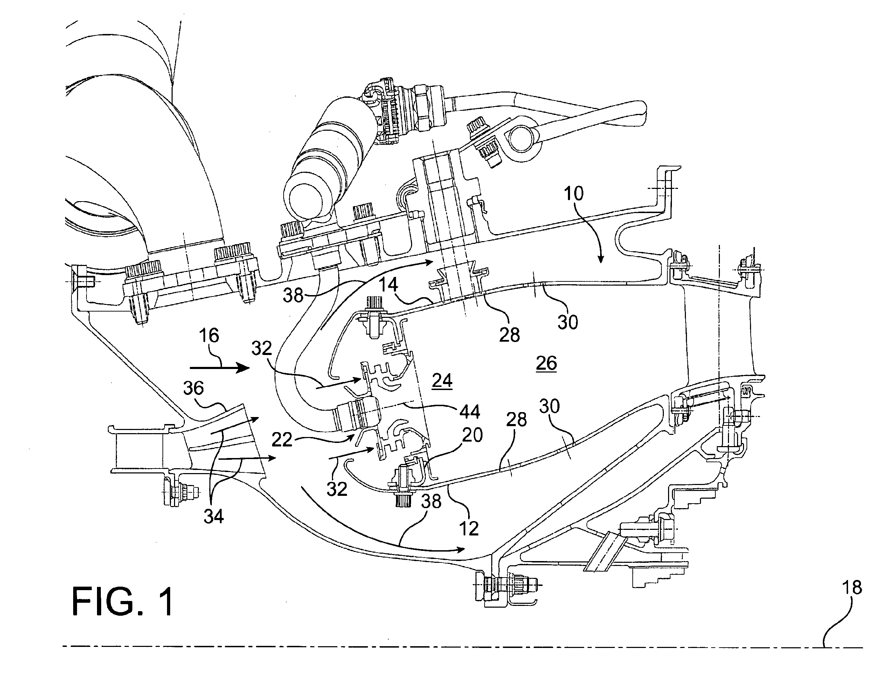

La figure 1 annexée représente un exemple typique de chambre de combustion 10 de turbomachine, comprenant deux parois annulaires coaxiales, respectivement radialement interne 12 et radialement externe 14, qui s'étendent de l'amont vers l'aval, selon le sens 16 d'écoulement du flux primaire de gaz dans la turbomachine, autour de l'axe 18 de la chambre de combustion, et qui sont reliées entre elles à leur extrémité amont par une paroi annulaire 20 de fond de chambre qui s'étend sensiblement radialement autour de l'axe 18 précité. Cette paroi annulaire de fond de chambre 20 est équipée de systèmes d'injection 22 répartis autour de cet axe pour permettre une amenée d'air et de carburant dans la chambre de combustion.

D'une manière générale, les chambres de combustion se décomposent en une région interne amont 24, couramment appelée zone primaire, et une région interne aval 26, couramment appelée zone de dilution.

La zone primaire 24 d'une chambre de combustion est prévue pour la combustion du mélange d'air et de carburant et est alimentée en air non seulement par les systèmes d'injection 22 mais aussi par des orifices d'entrée d'air 28, couramment appelés orifices primaires, ménagés dans les parois coaxiales 12 et 14 de la chambre autour de la zone primaire 24 de cette dernière, selon une ou plusieurs rangées annulaires.

La zone de dilution 26 est prévue pour la dilution et le refroidissement des gaz issus de la combustion dans la zone primaire, et pour conférer au flux de ces gaz un profil thermique optimal en vue de son passage dans la turbine montée en aval de la chambre de combustion. Pour cela, les parois coaxiales 12 et 14 de la chambre de combustion comportent, en aval des orifices primaires 28 précités, au moins une rangée d'orifices d'entrée d'air 30, couramment appelés orifices de dilution.

En fonctionnement, une partie 32 d'un flux d'air 34 provenant d'une sortie de compresseur 36 alimente les systèmes d'injection 22 tandis qu'une autre partie 38 de ce flux d'air contourne la chambre de combustion en s'écoulant vers l'aval le long des parois coaxiales 12 et 14 de cette chambre et permet notamment l'alimentation des orifices primaires 28 et de dilution 30.

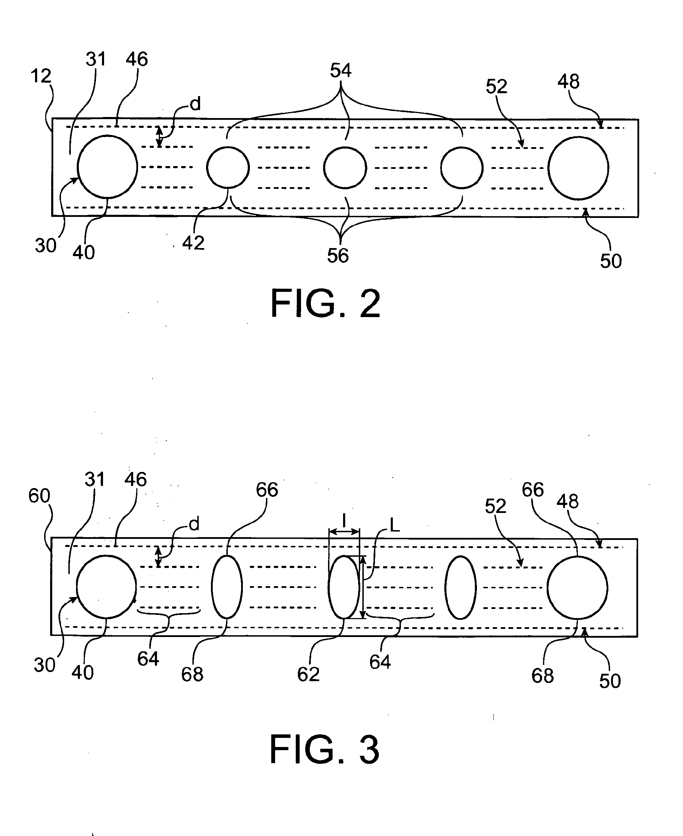

Comme l'illustre la figure 2 annexée qui montre une vue développée en plan d'une partie 31 de paroi annulaire de chambre de combustion comprenant une rangée annulaire d'orifices de dilution 30 de section circulaire, ces derniers comprennent habituellement des orifices 40 de plus grande superficie en section et des orifices 42 de plus petite superficie en section.

Les orifices de dilution 40 de plus grande superficie sont par exemple centrés, chacun, par rapport à l'axe 44 (figure 1) d'un système d'injection 22 correspondant, tandis que les orifices de dilution 42 de plus petite superficie en section sont intercalés entre les orifices 40 de plus grande superficie et sont par exemple trois fois plus nombreux que ces derniers (figure 2).

Il est en général nécessaire de refroidir les parois annulaires coaxiales 12, 14 des chambres de combustion, compte-tenu des températures élevées atteintes par les gaz au cours de la combustion.

A cet effet, la multiperforation est une technique connue résidant dans la formation d'une pluralité de micro-perforations 46 (figure 2), c'est-à-dire de petits orifices d'environ 0,6 mm de diamètre, habituellement d'axe incliné, dans certaines régions des parois coaxiales 12, 14 des chambres de combustion. Une partie du flux d'air 38 relativement frais contournant ces chambres de combustion peut y pénétrer par ces micro-perforations et constituer un film d'air de refroidissement le long des faces internes des parois coaxiales 12 et 14 de ces chambres de combustion.

Toutefois, en fonctionnement, les parois coaxiales 12, 14 des chambres de combustion se dilatent thermiquement et sont soumises à d'importantes vibrations, de nature à engendrer des contraintes élevées susceptibles de provoquer l'apparition de fissures ou criques, notamment au niveau des bords des orifices de dilution 30.

Pour limiter les risques d'apparition et d'extension de telles fissures, il est en général prévu un écartement minimal entre les orifices de dilution 30 ainsi qu'un périmètre dépourvu de micro-perforations autour de chacun de ces orifices.

De plus, les micro-perforations 46 étant habituellement disposées en rangées homogènes régulièrement espacées selon la direction axiale, il est également prévu un espacement axial minimal entre ces rangées de micro-perforations 46.

Cependant, le respect dudit périmètre dépourvu de micro-perforations autour des orifices de dilutions 30 ne permet pas un refroidissement optimal de certaines zones du pourtour de ces orifices, notamment en ce qui concerne les orifices de plus petite superficie en section 42, et en particulier lorsque les micro-perforations 46 sont disposées en rangées régulièrement espacées selon la direction axiale.

Ce problème est illustré sur la figure 2 qui montre deux rangées annulaires de micro-perforations 46, respectivement amont 48 et aval 50, qui sont formées respectivement en amont et en aval de la rangée annulaires d'orifices de dilution 30, ainsi que trois rangées intercalaires 52 de micro-perforations 46 qui sont disposées entre les rangées amont 48 et aval 50 précitées et qui sont interrompues par les orifices de dilution 30, l'écartement axial constant entre deux rangées consécutives de micro-perforations 46 portant la référence d sur cette figure.

En effet, le respect dudit périmètre dépourvu de micro-perforations induit l'existence de zones de relativement grande étendue dépourvues de micro-perforations, au niveau de parties amont 54 et aval 56 du pourtour de chaque orifice de dilution de plus petite superficie en section 42, ce qui risque de se traduire par un refroidissement insuffisant de ces parties amont 54 et aval 56. Une autre turbomachine est connue du document EP 1 363 075 A2, qui décrit une paroi annulaire pour une chambre annulaire de combustion comprenant une rangée annulaire d'orifices d'entrée d'air de dilution comprenant des orifices de deux types différenciés par leur superficie en section, parmi lesquels des orifices de plus grande superficie en section et des orifices de plus petite superficie en section, ainsi qu'une multiperforation pour le refroidissement de ladite paroi, ladite multiperforation étant formée de micro-perforations qui présentent une superficie en section inférieure à celle de chacun desdits orifices d'entrée d'air de dilution et qui sont répartis en une rangée annulaire amont et une rangée annulaire aval formées respectivement en amont et en aval de ladite rangée d'orifices d'entrée d'air de dilution, et en au moins une rangée annulaire intercalaire interrompue par lesdits orifices d'entrée d'air de dilution, un rapport géométrique étant défini pour chacun desdits orifices d'entrée d'air de dilution comme le quotient de la division de l'écartement maximal L entre deux points quelconques du bord de cet orifice mesuré selon une direction parallèle à un axe de révolution de ladite paroi par l'écartement maximal I entre deux points quelconques du bord de cet orifice mesuré selon une direction perpendiculaire audit axe de révolution, ledit rapport géométrique desdits orifices d'entrée d'air de dilution de plus grande superficie en section étant égal à 1.

### EXPOSÉ DE L'INVENTION

L'invention a notamment pour but d'améliorer le refroidissement du pourtour des orifices de dilution d'une chambre de combustion, d'une manière simple, économique, efficace, et qui permette d'éviter au moins en partie les inconvénients précités.

L'invention propose à cet effet une paroi annulaire pour chambre annulaire de combustion de turbomachine, comprenant au moins une rangée annulaire d'orifices d'entrée d'air de dilution comprenant des orifices de deux types différenciés par leur superficie en section, parmi lesquels des orifices de plus grande superficie en section et des orifices de plus petite superficie en section, ainsi qu'une multiperforation pour le refroidissement de ladite paroi, ladite multiperforation étant formée de micro-perforations qui présentent une superficie en section inférieure à celle de chacun desdits orifices d'entrée d'air de dilution et qui sont répartis en une rangée annulaire amont et une rangée annulaire aval formées respectivement en amont et en aval de ladite rangée d'orifices d'entrée d'air de dilution, et en au moins une rangée annulaire intercalaire interrompue par ces orifices d'entrée d'air de dilution, un rapport géométrique étant défini pour chacun des orifices d'entrée d'air de dilution comme le quotient de la division de l'écartement maximal entre deux points quelconques du bord de cet orifice mesuré selon une direction parallèle à un axe de révolution de la paroi par l'écartement maximal entre deux points quelconques du bord de cet orifice mesuré selon une direction perpendiculaire à cet axe.

Le rapport géométrique précité est supérieur ou égal à 1, dans le cas desdits orifices d'entrée d'air de dilution de plus grande superficie en section, et Selon l'invention le rapport géométrique, dans le cas desdits orifices d'entrée d'air de dilution de plus petite superficie en section, est supérieur à celui desdits orifices d'entrée d'air de dilution de plus grande superficie en section.

La conformation des orifices d'entrée d'air de dilution de plus petite superficie en section permet de rapprocher des rangées amont et aval de micro-perforations les parties amont et aval du bord de ces orifices et donc de réduire, voire de supprimer, les zones dépourvues de micro-perforations qui se rencontrent dans les parois de type connu comme expliqué ci-dessus. Il en résulte une homogénéisation du refroidissement du pourtour de ces orifices.

De plus, la conformation des orifices d'entrée d'air de dilution de plus petite superficie en section permet de maintenir un écartement circonférentiel suffisant entre l'ensemble des orifices de dilution, et même d'accroître cet écartement dans certains cas, par exemple entre deux orifices de plus petite superficie adjacents ou entre un orifice de plus petite superficie et un orifice de plus grande superficie qui lui est adjacent.

Le maintien de l'écartement circonférentiel entre orifices de dilution adjacents permet de limiter les risques d'apparition de fissures ou criques au niveau du bord de ces orifices.

Le cas échéant, l'accroissement de l'écartement circonférentiel entre orifices de dilution adjacents permet en outre d'accroître l'étendue circonférentielle des secteurs angulaires des rangées intercalaires de micro-perforations ménagées entre ces orifices, et donc d'améliorer davantage le refroidissement procuré par la multiperforation.

Dans un mode de réalisation préféré de l'invention, les orifices d'entrée d'air de dilution de plus grande superficie en section sont de forme circulaire et les orifices d'entrée d'air de dilution de plus petite superficie en section sont de forme ovale.

Dans ce cas, le rapport géométrique précité est égal à 1 pour les orifices d'entrée d'air de dilution de plus grande superficie en section.

Les bords des orifices d'entrée d'air de dilution des deux types présentent avantageusement des extrémités amont et/ou aval respectives qui sont alignées circonférentiellement.

Une telle configuration permet de réduire au mieux les écarts de niveau de refroidissement entre les deux types d'orifices d'entrée d'air de dilution.

Dans le mode de réalisation préféré de l'invention, chaque rangée annulaire intercalaire de ladite multiperforation est interrompue par les orifices d'entrée d'air de dilution des deux types.

La multiperforation permet ainsi un refroidissement optimal de l'ensemble de ces orifices d'entrée d'air de dilution.

En variante, certaines rangées intercalaires peuvent n'être interrompues que par les orifices de dilution de plus grande superficie, lorsque cela présente un intérêt.

Par ailleurs, l'écartement axial entre chaque couple de rangées consécutives, parmi lesdites rangées annulaires amont, aval et intercalaires de ladite multiperforation, est de préférence égal à une valeur constante prédéterminée.

Une telle régularité dans la disposition des micro-perforations, connue en elle-même, permet notamment de faciliter la réalisation de ces micro-perforations.

L'invention concerne également une chambre annulaire de combustion pour turbomachine, comprenant deux parois annulaires coaxiales, respectivement interne et externe, raccordées l'une à l'autre par une paroi annulaire de fond de chambre, et dont l'une au moins est du type décrit ci-dessus.

L'invention concerne encore une turbomachine comprenant une chambre annulaire de combustion du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique partielle en coupe axiale d'une chambre de combustion de turbomachine d'un type connu ;
- la figure 2, déjà décrite, est une vue schématique partielle développée en plan d'une paroi annulaire de la chambre de combustion de la figure 1 ;
- la figure 3 est une vue semblable à la figure 2, d'une paroi annulaire de chambre de combustion selon l'invention.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

La figure 3 illustre une partie d'une paroi annulaire 60 destinée à constituer la paroi interne ou la paroi externe d'une chambre de combustion de turbomachine semblable à la chambre de combustion de la figure 1 décrite ci-dessus.

Cette paroi annulaire 60 diffère de la paroi de type connu illustrée sur la figure 2 par la conformation de ses orifices d'entrée d'air de dilution de plus petite superficie en section 62 et par la configuration des micro-perforations 46 de cette paroi.

En effet, les orifices d'entrée d'air de dilution de plus petite superficie en section 62 présentent une forme ovale, de grand axe sensiblement parallèle à l'axe de révolution de la chambre de combustion.

En revanche, les orifices d'entrée d'air de dilution de plus grande superficie en section 40 étant semblables à ceux de la paroi de la figure 2, les orifices d'entrée d'air de dilution de plus petite superficie 62 présentent une superficie sensiblement identique à celle des orifices d'entrée d'air de dilution de plus petite superficie 42 de la figure 2.

La forme ovale des orifices 62 permet un accroissement de l'étendue circonférentielle de chaque secteur angulaire 64 des rangées intercalaires 52 de micro-perforations 46, en particulier en ce qui concerne les secteurs angulaires situés entre deux orifices de plus petite superficie 62 adjacents.

Cette forme ovale permet en outre d'accroître la densité globale de micro-perforations 46 sur le pourtour de chaque orifice de dilution de plus petite superficie 62, et permet en particulier d'éviter l'existence de zones dépourvues de micro-perforations sur ce pourtour, telles que les zones 54 et 56 de la figure 2.

La forme ovale des orifices 62 n'est qu'un exemple de conformation d'orifices parmi de multiples possibilités dans lesquelles le quotient de la division de l'écartement maximal *L* entre deux points quelconques du bord de chaque orifice mesuré selon une direction parallèle à l'axe de révolution 18 (figure 1) de la paroi par l'écartement maximal *l* entre deux points quelconques du bord de cet orifice mesuré selon une direction perpendiculaire à cet axe 18 est supérieur ou égal à un dans le cas des orifices 40 de plus grande superficie en section, et est supérieur à celui desdits orifices 40 de plus grande superficie en section dans le cas des orifices 62 de plus petite superficie en section.

Dans l'exemple illustré sur la figure 3, les orifices de dilution 40 et 62 des deux types présentent des extrémités amont 66 et aval 68 respectives qui sont alignées circonférentiellement, pour une homogénéité de refroidissement optimale.

## Revendications

1. Paroi annulaire (60) pour chambre annulaire de combustion (10) de turbomachine, comprenant au moins une rangée annulaire d'orifices d'entrée d'air de dilution (30) comprenant des orifices de deux types différenciés par leur superficie en section, parmi lesquels des orifices (40) de plus grande superficie en section et des orifices (62) de plus petite superficie en section, ainsi qu'une multiperforation (48, 50, 52) pour le refroidissement de ladite paroi, ladite multiperforation étant formée de micro-perforations (46) qui présentent une superficie en section inférieure à celle de chacun desdits orifices d'entrée d'air de dilution (30) et qui sont répartis en une rangée annulaire amont (48) et une rangée annulaire aval (50) formées respectivement en amont et en aval de ladite rangée d'orifices d'entrée d'air de dilution (30), et en au moins une rangée annulaire intercalaire (52) interrompue par lesdits orifices d'entrée d'air de dilution (30), un rapport géométrique étant défini pour chacun desdits orifices d'entrée d'air de dilution (30) comme le quotient de la division de l'écartement maximal L entre deux points quelconques du bord de cet orifice mesuré selon une direction parallèle à un axe de révolution (18) de ladite paroi par l'écartement maximal l entre deux points quelconques du bord de cet orifice mesuré selon une direction perpendiculaire audit axe de révolution (18),
- ledit rapport géométrique desdits orifices d'entrée d'air de dilution (40) de plus grande superficie en section étant supérieur ou égal à 1, ladite paroi étant **caractérisée en ce que**
- ledit rapport géométrique desdits orifices d'entrée d'air de dilution (62) de plus petite superficie en section est supérieur à celui desdits orifices d'entrée d'air de dilution (40) de plus grande superficie en section.

2. Paroi selon la revendication 1, **caractérisée en ce que** lesdits orifices d'entrée d'air de dilution (40) de plus grande superficie en section sont de forme circulaire et lesdits orifices d'entrée d'air de dilution (62) de plus petite superficie en section sont de forme ovale.

3. Paroi selon la revendication 1 ou 2, **caractérisée en ce que** les bords desdits orifices d'entrée d'air de dilution (30, 40, 62) des deux types présentent des extrémités amont (66) et/ou aval (68) respectives qui sont alignées circonférentiellement.

4. Paroi selon l'une quelconque des revendications 1 à 3, **caractérisée en ce que** chaque rangée annulaire intercalaire (52) de ladite multiperforation est interrompue par lesdits orifices d'entrée d'air de dilution (30, 40, 62) des deux types.

5. Paroi selon l'une quelconque des revendications 1 à 4, **caractérisée en ce que** l'écartement axial entre chaque couple de rangées consécutives, parmi lesdites rangées annulaires amont (48), aval (50) et intercalaires (52) de ladite multiperforation, est égal à une valeur constante d prédéterminée.

6. Chambre annulaire de combustion (10) pour turbomachine, comprenant deux parois annulaires coaxiales, respectivement interne (12) et externe (14), raccordées l'une à l'autre par une paroi annulaire de fond de chambre (20), **caractérisée en ce que** l'une au moins desdites parois annulaires coaxiales est une paroi (60) selon l'une quelconque des revendications 1 à 5.

7. Turbomachine, **caractérisée en ce qu'**elle comprend une chambre annulaire de combustion (10) selon la revendication 6.

## Patentansprüche

1. Ringförmige Wand (60) für eine ringförmige Brennkammer (10) einer Turbomaschine, umfassend wenigstens eine ringförmige Reihe von Verdünnungslufteintrittsöffnungen (30), die Öffnungen von zwei durch ihre Querschnittsfläche unterschiedlichen Typen, darunter Öffnungen (40) mit größerer Querschnittsfläche und Öffnungen (62) mit kleinerer Querschnittsfläche, umfassen, sowie eine Mehrfachlochung (48, 50, 52) zum Kühlen der Wand, wobei die Mehrfachlochung von Mikrolöchern (46) gebildet ist, die eine kleinere Querschnittfläche als eine jede der Verdünnungslufteintrittsöffnungen (30) aufweisen und die in einer ringförmigen stromaufwärtigen Reihe (48) und einer ringförmigen stromabwärtigen Reihe (50), welche stromaufwärts bzw. stromabwärts der Reihe von Verdünnungslufteintrittsöffnungen (30) gebildet sind, sowie in wenigstens einer ringförmigen Zwischenreihe (52), welche durch die Verdünnungslufteintrittsöffnungen (30) unterbrochen ist, verteilt sind, wobei ein geometrisches Verhältnis für jede der Verdünnungslufteintrittsöffnungen (30) als der Quotient aus der Division des Maximalabstands L zwischen zwei beliebigen Punkten des Randes dieser Öffnung, in einer zu einer Rotationsachse (18) der Wand parallelen Richtung gemessen, durch den Maximalabstand 1 zwischen zwei beliebigen Punkten des Randes dieser Öffnung, in einer zu der Rotationsachse (18) senkrechten Richtung gemessen, definiert ist,
- wobei das geometrische Verhältnis der Verdünnungslufteintrittsöffnungen (40) mit größerer Querschnittsfläche größer oder gleich 1 ist,
wobei die Wand **dadurch gekennzeichnet ist, dass**
- das geometrische Verhältnis der Verdünnungslufteintrittsöffnungen (62) mit kleinerer Querschnittsfläche größer als das der Verdünnungslufteintrittsöffnungen (40) mit größerer Querschnittsfläche ist.

2. Wand nach Anspruch 1, **dadurch gekennzeichnet, dass** die Verdünnungslufteintrittsöffnungen (40) mit größerer Querschnittsfläche eine Kreisform aufweisen und die Verdünnungslufteintrittsöffnungen (62) mit kleinerer Querschnittsfläche eine ovale Form aufweisen.

3. Wand nach Anspruch 1 oder 2, **dadurch gekennzeichnet, dass** die Ränder der Verdünnungslufteintrittsöffnungen (30, 40, 62) der beiden Typen jeweilige stromaufwärtige (66) und/oder stromabwärtige (68) Enden, die umfangseitig fluchten, aufweisen.

4. Wand nach einem der Ansprüche 1 bis 3, **dadurch gekennzeichnet, dass** jede ringförmige Zwischenreihe (52) der Mehrfachlochung durch die Verdünnungslufteintrittsöffnungen (30, 40, 62) der beiden Typen unterbrochen ist.

5. Wand nach einem der Ansprüche 1 bis 4, **dadurch gekennzeichnet, dass** der Axialabstand zwischen jedem Paar von aufeinanderfolgenden Reihen, aus den ringförmigen stromaufwärtigen (48), stromabwärtigen (50) und Zwischenreihen (52) der Mehrfachlochung gleich einem vorbestimmten konstanten Wert d ist.

6. Ringförmige Brennkammer (10) für eine Turbomaschine, umfassend zwei koaxiale ringförmige Wände, eine innere (12) bzw. eine äußere (14), die durch eine ringförmige Kammerbodenwand (20) miteinander verbunden sind, **dadurch gekennzeichnet, dass** wenigstens eine der koaxialen ringförmigen Wände eine Wand (60) nach einem der Ansprüche 1 bis 5 ist.

7. Turbomaschine, **dadurch gekennzeichnet, dass** sie eine ringförmige Brennkammer (10) nach Anspruch 6 umfasst.

## Claims

1. Annular wall (60) for an annular turbine engine combustion chamber (10), comprising at least one annular row of dilution air inlet orifices (30) comprising two types of orifices differentiated by their cross-sectional area, namely orifices with a larger area (40) and orifices with a smaller area (62), and a multi-perforation (48, 50, 52) for cooling said wall, said multi-perforation being formed from micro-perforations (46) that have a cross-sectional area less than the area of each of said dilution air inlet orifices (30) and that are distributed as an upstream annular row (48) and a downstream annular row (50) formed on the upstream side and downstream side respectively of said row of dilution air inlet orifices (30), and as at least one intermediate annular row (52) interrupted by said dilution air inlet orifices (30), a geometric ratio being defined for each of said dilution air inlet orifices (30) as the quotient obtained by dividing the maximum spacing L between any two points on the edge of this orifice measured along a direction parallel to an axis of revolution (18) of said wall by the maximum spacing l between any two points on the edge of this orifice measured along a direction perpendicular to said axis of revolution (18),
said geometric ratio of said dilution air inlet orifices with the larger area (40) is greater than or equal to 1,
said wall being **characterised in that** said geometric ratio of said dilution air inlet orifices with the smaller area (62) is greater than the geometric ratio of said dilution air inlet orifices with the larger area (40).

2. Wall according to claim 1, **characterised in that** said dilution air inlet orifices (40) with the larger area are circular in shape and said dilution air inlet orifices (62) with the smaller area are oval in shape.

3. Wall according to claim 1 or 2, **characterised in that** the edges of both types of said dilution air inlet orifices (30, 40, 62) have respective upstream (66) and/or downstream ends (68) that are circumferentially in line with each other.

4. Wall according to any one of claims 1 to 3, **characterised in that** each intermediate annular row (52) of said multi-perforation is interrupted by both types of dilution air inlet orifices (30, 40, 62).

5. Wall according to any one of claims 1 to 4, **characterised in that** the axial spacing between each pair of consecutive rows among said upstream (48), downstream (50) and intermediate (52) annular rows of said multi-perforation, is equal to a constant predetermined value.

6. Annular combustion chamber (10) for a turbine engine, comprising two coaxial annular walls, namely an inner wall (12) and an outer wall (14), connected to each other by an annular chamber bottom wall (20), **characterised in that** at least one of said coaxial annular walls is a wall (60) according to any one of claims 1 to 5.

7. Turbine engine, **characterised in that** it comprises an annular combustion chamber (10) according to claim 6.
